# EUROPEAN PATENT SPECIFICATION

(11) **EP 0 880 898 B1**
(45) Date of publication and mention of the grant of the patent: **26.03.2003**
(21) Application number: 98850086.4
(22) Date of filing: 20.05.1998
(51) Int. Cl.: A22C 25/14

(54) **Means for mechanical removal of the head and stomach of fish whereby the head is cut partly**
Vorrichtung zum mechanischen Entfernen von teils eingeschnittenem Kopf und Magen von Fischen
Moyens pour l'enlèvement mécanique de la tête partiellement coupée et de l'estomac de poissons

(30) Priority: 26.05.1997 SE 9701944
(43) Date of publication of application: 02.12.1998
(73) Proprietor: VMK Fish Machinery AB, 415 02 Göteborg (SE)
(72) Inventor: Högstedt, Ragnar, 436 45 Askim (SE)
(74) Representative: Bergquist, Kjell Gunnar

(56) References cited:
- DE-A- 2 206 999
- DE-B- 1 778 641
- FR-A- 763 392
- GB-A- 673 398
- US-A- 1 577 518
- US-A- 2 483 508
- US-A- 4 531 261
- US-A- 5 083 972

## Description

### TECHNICAL FIELD:

The present invention relates to a means for mechanical and simultaneous removal of the head and stomach of fish (see e.g. DE-A-22 06 999) especially of small fish types, such as anchovies and sprats, etc., which after the removal shall be placed in a tin or the like.

### PRIOR ART:

Small shoal fish which are suitable, such as anchovies, sardines in oil or tomato, usually have a length of 15-18 cm. Before the insertion of the fish into a tin or something else, the head is usually cut off the fish, whereas everything else on it remains and is put in, thus including the stomach. This cutting is usually done manually although machines for cutting heads especially on larger fish have been developed.

### TECHNICAL PROBLEM:

For small fish which are to be used for the purpose mentioned above but which nevertheless are of a certain size, it is desirable, however, that both the head and the stomach are removed. Hitherto, this has been done manually and a great number of people skilled in the art have carried out this cutting and stomach removal, which involves a very high cost. The result as such has been satisfactory but since the fish are small and a great number thereof must be treated to collect a reasonable sellable amount, the costs have been so high that competitive prices have been difficult to achieve. A mechanical method for performing this work which gives a desired result and is economically advantageous has therefore long been desired.

### THE SOLUTION:

According to the present invention a means has therefore been brought about for simultaneous removal of the head and stomach of fish, which means is characterized by a compartment conveyor for moving the fish forwards having elongate compartments for the fish transverse to the intended feeding direction, wherein the compartments at the intended head end for the fish have an open bottom part and lack a transverse wall, and cutting devices for incomplete cutting of the fish head arranged in a running band which is synchronous in relation to and in the same running direction as and has the same speed as the compartment conveyor, close to the compartment conveyor at the side for the fish head, wherein the cutting devices comprise an underlying horizontal table intended to synchronously be moved in under the opening in the bottom part of the compartment and a knife for vertical impact against the table when the fish head is there, wherein the compartment conveyor and the band with the cutting means diverge in the forward movement direction after the impact point of the knife against the table, and a clamping arrangement for the fish after the head cutting point.

According to the invention, it is suitable that the knife has an edge piece which is fastened on a shaft being swingable around a horizontal axis.

According to the invention, it is suitable that the shaft carries an upwardly directed spring-loaded rod which is intended to be forced backwards under tensioning of the spring by a guiding rail in the forward direction before the cutting point.

It is further suitable according to the invention that the edge piece is arc-shaped having the concave side turned away from the compartment conveyor, or is elliptical or s-formed.

The table in the cutting device should, according to the invention, be provided with grooves or protrusions in the transverse direction in the forward direction of the bands to prevent the complete knife edge from coming into contact with the table surface.

According to the invention, the clamping device comprises an endless band having clamping pieces intended to press against and hold the fish bodies, which band has the same velocity and forward direction as the side of the compartment conveyor turned towards it.

The clamping pieces may, according to the invention, be provided with soft material, for example rubber rings or springs intended to press against the fish bodies.

According to the invention, it is further suitable that an adjustable elongated wall is arranged at the side of the compartment conveyor and adjacent to it before the cutting place and intended as an abutment for the fish head.

### DESCRIPTION OF THE FIGURES:

The invention will in the following be described more in detail with reference to the attached drawings, in which:
- Fig. 1: somewhat simplified shows a machine according to the present invention seen from above, and in which
- Fig. 2: shows in a simplified form a section through the line A-A.

### DETAILED DESCRIPTION:

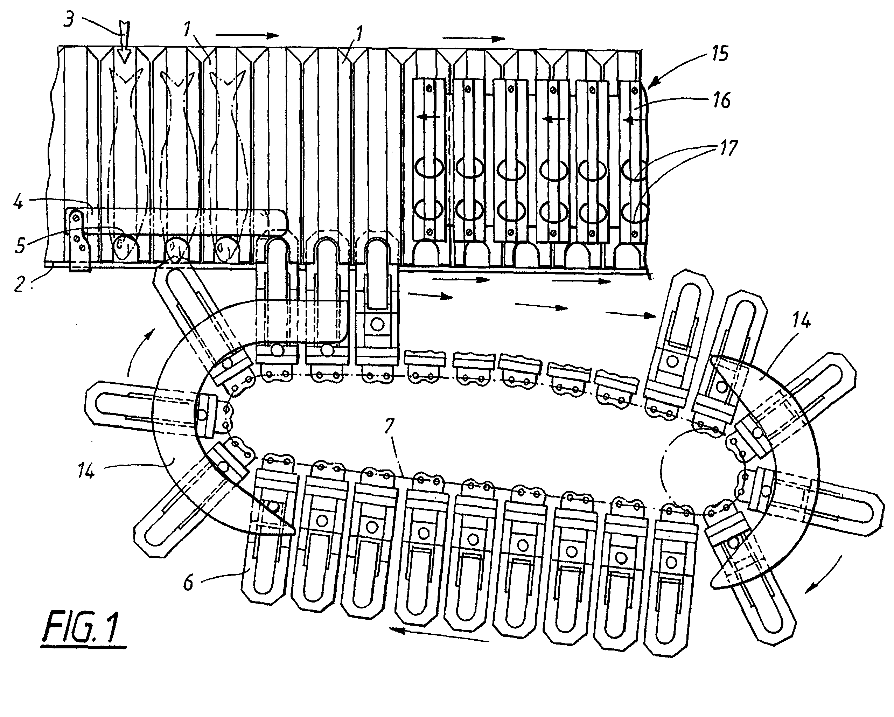

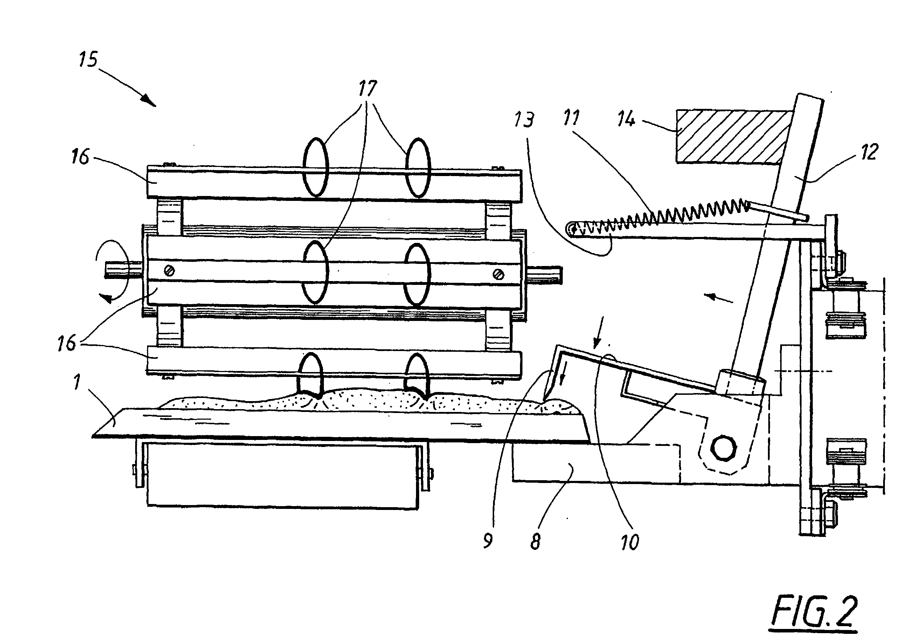

In Figs. 1 and 2 the fish compartments 1 are shown as elongate bodies having a dent in the middle part into which the fish are to be laid. The compartments are arranged on an endless chain or conveyor and are moved forwards in the direction which is shown with an arrow in Fig. 1. The fish is laid on the compartment conveyor with one fish in each compartment 1 and with the head directed in the same direction, i.e. downwardly in the figure. A wall 2 is arranged at the side of the conveyor so that the head of the fish shall abut against this wall 2 and accordingly assume a predetermined position. To enable the fish to glide against the wall 2 more easily, a jet of water 3 may flow in the correct direction in the compartment 1. To further secure the position of the fish, a stationary strip 4 may be arranged above the compartments 1, which stationary strip 4, suitably of plastics, presses gently against the fish and holds them in position.

As appears from the figure, the compartments 1 are open at both ends and a recess 5 has been made in the bottom of the compartments at the end where the head is intended to lie. The head will accordingly be easily accessible for cutting.

The cutting devices 6, which are intended to cut the head of the fish incompletely, are arranged on an endless band or chain 7, which is driven synchronously with the compartment conveyor and has the same speed as this and the same forward direction on that side which faces the compartment conveyor. These knife devices consist of a table 8 and a knife which is mounted on the table 8 and swingable in a vertical plane and has an edge piece 9 and a shaft 10. The table 8 is intended to be moved in under a compartment 1 at its open bottom where the head is and the knife edge 9, which is moved upwards when the table 8 is moved in under the opening in the compartment 1, is actuated by a tensioned spring 11 and falls down against the table and cuts the head incompletely when the spring force is released. To enable this spring 11 to be tensioned, it is mounted in a rod 12 which points upwardly from the shaft 10 and to a support 13, which via suitable arrangements are stationarily united with the table 8. The spring 11 is tensioned by the rod 12 being pushed backwards by a stationary rail 14 when the rod passes it. At the cutting point the rail 14 ends and the spring 11 will therefore push the rod 12 forwards so that the edge piece 9 of the knife abuts the table and partially cuts the fish head.

To hold the fish, a clamping arrangement 15 is arranged above the compartment conveyor. This clamping arrangement 15 also comprises an endless band or chain on which clamping plates 16 have been mounted. Seen from above, this clamping arrangement 15 rotates in the opposite direction to the forward movement direction for the compartment conveyor, which means that it will have the same forward movement direction when it turns at the cutting place. The clamping arrangement 15 which presses against the fish in the compartment 1 has the same speed as the compartment conveyor. To prevent the fish from being damaged, the clamping plates 16 are provided with rings 17 of soft material so that the clamping will be gentle.

As appears from Fig. 1, the forward movement direction for the compartment conveyor and the band for the cutting devices 6 diverge. This means that when the head has been partially cut on the fish and the edge of the knife 9 is kept down at the same time as the fish body is clamped in the compartment 1, the head, due to the diverging forward movement directions, will be torn away from the last connecting part with the fish body and the stomach, which has not been cut but hangs together with the head, will be drawn out. To enable this to take place without disturbances it is an advantage that the edge piece is arc-shaped having the concave side facing away from the compartment conveyor.

To ensure that the fish head is not cut completely when the knife with the edge piece 9 impacts, longitudinal grooves or protusions are arranged in the table in the transverse direction of the forward movement direction for the bands. In this way the knife edge 9 will not come into contact with the table surface 8 along its entire length. As an alternative, the edge itself may have recesses which make it somewhat tooth-shaped. However, it is preferable that the edge is straight and the table has the above-mentioned surface.

After the band and conveyor have diverged from the cutting place and the head with the stomach have been separated from the other part of the fish body, the band with the cutting devices 6 is turned and a second rail 14 is arranged at the turning point for lifting the knife edge 9 so that the head and the stomach fall out. Thereafter, the band with the cutting devices 6 continues as described above. The treated fish body is released from the clamping arrangement 15 at the turning point thereof and it can be taken care of in a suitable way.

The invention is not limited to the embodiment examples shown and it can be varied in different ways within the scope of the patent claims. It replaces a manual method which gives a product having an appearance and quality which is required by the market.

## Claims

1. Means for simultaneous removal of the head and stomach of fish, wherein the means comprises a compartment conveyor for moving the fish forwards having elongate compartments (1) for the fish transverse in relation to the intended forward moving direction, wherein the compartments (1) at the intended head end for the fish have an open bottom part (5) and lack a transverse wall, and cutting devices (6) for incomplete cutting of the fish head arranged on a running band which is synchronous in relation to and in the same direction as and has the same speed as the compartment conveyor at the side of the compartment conveyor for the fish head, wherein the cutting means (6) comprise an underlying, horizontal table (8) intended to synchronously be moved in under the opening (5) in the bottom part of the compartments (1) and a knife (9) for vertical impact against the table (8) when the fish head is there, wherein the compartment conveyor and the band with the cutting means (6) diverge in the forward movement direction after the impact point of the knife (9) against the table (8), and a clamping arrangement (15) for the fish after the head cutting place.

2. Means according to claim 1,
**characterized in that** the knife has an edge piece (9) mounted on a shaft (10) being swingable around a horizontal axis.

3. Means according to any one of claims 1 or 2,
**characterized in that** the shaft (10) carries an upwardly directed spring-loaded rod (12) which is intended to be forced backwards under tension of a spring (11) by a guiding rail (14) in the forward movement direction before the cutting place.

4. Means according to any one of claims 1-3,
**characterized in that** the edge piece (9) is arc-shaped with the concave side turned away from the compartment conveyor, or is ellipse or s-shaped.

5. Means according to any one of claims 1-4,
**characterized in that** the table (8) is provided with grooves or protrusions in the transverse direction of the forward movement direction of the bands to prevent the whole knife edge (9) from coming into contact with the table surface (8).

6. Means according to claim 1,
**characterized in that** the clamping arrangement (15) comprises an endless band having clamping pieces (16) intended to press against and hold the fish bodies, which band has the same speed and direction of movement as the side of the compartment conveyor faced towards it.

7. Means according to claim 6,
**characterized in that** the clamping pieces (16) are provided with a soft material, for example rubber rings or springs (17) intended to press against the fish bodies.

8. Means according to any one of claims 1-7,
**characterized in that** an adjustable elongated wall (2) is arranged at the side of the compartment conveyor and adjacent to it before the cutting place and is intended as an abutment for the fish head.

## Patentansprüche

1. Vorrichtung zum gleichzeitigen Entfernen des Kopfes und des Magens eines Fisches, wobei zu der Vorrichtung gehören:
ein Fachförderer zur Vorwärtsbewegung des Fisches, der längliche Fächer (1) für den Fisch quer bezüglich der vorgesehenen Vorwärtsbewegungsrichtung aufweist, wobei die Fächer (1) an dem vorgesehenen Kopfende für den Fisch einen offenen Bodenabschnitt (5) und keine Querwand sowie Schneideinrichtungen (6) zum unvollständigen Abtrennen des Fischkopfes aufweisen, die auf einem Laufband an der Seite des Fachförderers für den Fischkopf angeordnet sind, welches synchron bezüglich des Fachförderers und in derselben Richtung und mit derselben Geschwindigkeit wie dieser läuft, wobei die Trenneinrichtung einen darunterliegenden horizontalen Tisch (8), der für eine synchrone Bewegung unter die Öffnung (5) in dem Bodenabschnitt der Fächer (11) vorgesehen ist, und ein Messer (9) zum vertikalen Auftreffen gegen den Tisch (8) aufweist, wenn sich der Fischkopf dort befindet, wobei der Bandförderer und das Band mit der Schneideinrichtung (6) in der Vorwärtsbewegungsrichtung nach der Auftreffstelle des Messers (9) gegen den Tisch (8) auseinanderlaufen, und
eine Klemmanordnung (15) für den Fisch nach der Kopfabtrennstelle.

2. Vorrichtung nach Anspruch 1, **dadurch gekennzeichnet, dass** das Messer ein Kantenceil (9) aufweist, dass auf einer Welle (10) montiert ist, die um eine horizontale Achse schwenkbar ist.

3. Vorrichtung nach Anspruch 1 oder 2, **dadurch gekennzeichnet, dass** die Welle (10) eine nach oben gerichtete federbelastete Stange (12) trägt, die unter der Spannung einer Feder (11) durch eine Führungsschiene (14) in der Vorwärtsbewegungsrichtung vor der Schnittstelle rückwärts drückbar ist.

4. Vorrichtung nach einem der Ansprüche 1 bis 3, **dadurch gekennzeichnet, dass** das Kantenteil (9) bogenförmig gestaltet ist, wobei die konkave Seite von dem Fachförderer wegweist, oder ellipsenförmig oder S-förmig ist.

5. Vorrichtung nach einem der Ansprüche 1 bis 4, **dadurch gekennzeichnet, dass** der Tisch (8) mit Nuten oder vorstehenden Anformungen in Querrichtung zur Vorwärtsbewegungsrichtung der Bänder zur Vermeidung eines Kontaktierens der Tischoberfläche (8) mit der gesamten Messerkante (9) versehen ist.

6. Vorrichtung nach Anspruch 1, **dadurch gekennzeichnet, dass** die Klemmanordnung (15) ein endloses Band aufweist, das Klemmstücke besitzt, die zum Pressen gegen und zum Halten der Fischkörper vorgesehen sind, wobei das Band dieselbe Geschwindigkeit und Bewegungsrichtung an der Seite des Fachförderers aufweist, die auf diesen weist.

7. Vorrichtung nach Anspruch 6, **dadurch gekennzeichnet, dass** die Spannteile (16) mit einem weichen Material, beispielsweise Gummiringen oder Federn (7) versehen sind, die zum Pressen gegen die Fischkörper dienen.

8. Vorrichtung nach einem der Ansprüche 1 bis 7, **dadurch gekennzeichnet, dass** an der Seite des Fachförderers und angrenzend an diesen vor der Schneidstelle eine einstellbare längliche Wand (2) angeordnet ist, die als Anschlag für den Fischkopf vorgesehen ist.

## Revendications

1. Moyens pour l'enlèvement simultané de la tête et de l'estomac d'un poisson, dans lesquels les moyens comprennent un convoyeur à compartiments, pour faire avancer les poissons, ayant des compartiments allongés (1) pour poissons transversaux par rapport à la direction d'avancement visée, dans lequel les compartiments (1) possèdent, au niveau de l'extrémité destinée à recevoir la tête de poissons, une partie inférieure ouverte (5) et où il manque une paroi transversale, et des dispositifs de coupe (6) pour la coupe incomplète de la tête du poisson, agencés sur une bande défilante qui est synchronisée avec le convoyeur à compartiments, dans la même direction et à la même vitesse et du côté du convoyeur à compartiments pour les têtes de poissons, dans lesquels les moyens de coupe (6) comprennent un plateau horizontal sous-jacent (8) destiné à être déplacé de manière synchrone sous les ouvertures (5) de la partie du corps des compartiments (1) et un couteau (9) à impact vertical contre le plateau (8) quand la tête de poisson est présente, dans lesquels le convoyeur à compartiments et la bande avec les moyens de coupe (6) diverge dans la direction d'avancement après le point d'impact du couteau (9) contre le plateau (8), et un agencement de blocage (15) du poisson après le lieu de coupe de la tête.

2. Moyens selon la revendication 1, **caractérisés en ce que** le couteau possède une pièce tranchante (9) montée sur un manche (10) pouvant pivoter autour d'un axe horizontal.

3. Moyens selon l'une des revendications 1 ou 2, **caractérisés en ce que** le manche (10) transporte une barre à ressort (12) dirigée vers le haut qui est destinée à être déplacée en arrière sous la tension d'un ressort (11) par un rail de guidage (14) dans la direction d'avancement avant le lieu de coupe.

4. Moyens selon l'une des revendications 1-3, **caractérisés en ce que** la pièce tranchante (9) est de forme arquée avec le côté concave tourné à l'opposé du convoyeur à compartiments, ou de forme elliptique ou en s.

5. Moyens selon l'une des revendications 1-4, **caractérisés en ce que** le plateau (8) est équipé avec des gorges ou des saillies dans une direction transversale à la direction d'avancement des bandes pour éviter que tout le couteau tranchant (9) vienne en contact avec la surface du plateau (8).

6. Moyens selon la revendication 1, **caractérisés en ce que** l'agencement de blocage (15) comprend une bande sans fin ayant des pièces de blocage (16) destinées à comprimer et à maintenir les corps de poisson, laquelle bande possède la même vitesse et direction de déplacement que le côté du convoyeur à compartiments en regard.

7. Moyens selon la revendication 6, **caractérisés en ce que** les pièces de blocage (16) sont équipés d'un matériau souple, par exemple des anneaux en caoutchouc ou des ressorts (17) destinés à comprimer les corps de poisson.

8. Moyens selon l'une des revendications 1-7, **caractérisés en ce qu'**une paroi adaptable allongée est agencée sur le côté du convoyeur à compartiments et de façon adjacente avant le lieu de coupe et est destinée à être un point d'appui pour la tête du poisson.
